(19) Europäisches Patentamt
European Patent Office
Office européen des brevets

(11) **EP 1 897 917 B1**

(12) **EUROPÄISCHE PATENTSCHRIFT**

(45) Veröffentlichungstag und Bekanntmachung des Hinweises auf die Patenterteilung:
**23.05.2018   Patentblatt 2018/21**

(51) Int Cl.:
***C09D 5/00*** *(2006.01)*

(21) Anmeldenummer: **07113761.6**

(22) Anmeldetag: **03.08.2007**

(54) **Verwendung von partikulären Emulgatoren in abhäsiven siloxanhaltigen Beschichtungsmassen**

Use of particulate emulsifiers in anti-adhesive coating masses containing siloxane

Utilisation d'émulsifiants particulaires dans des masses de revêtement anti-adhésives contenant du siloxane

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **07.09.2006   DE 102006041971**

(43) Veröffentlichungstag der Anmeldung:
**12.03.2008   Patentblatt 2008/11**

(73) Patentinhaber: **Evonik Degussa GmbH
45128 Essen (DE)**

(72) Erfinder:
• **Döhler, Hardi
  40221, Düsseldorf (DE)**
• **Ferenz, Michael
  45147, Essen (DE)**
• **Herrwerth, Sascha
  45134, Essen (DE)**
• **Naumann, Matthias
  45472, Mülheim (DE)**
• **Venzmer, Joachim
  45239, Essen (DE)**
• **Landgraf, Andreas
  46045, Oberhausen (DE)**

(56) Entgegenhaltungen:
**EP-A- 1 820 825       WO-A-2004/017930
DE-A1-102004 032 842       DE-A1-102004 039 212
DE-C1- 3 841 843       US-A- 5 494 979**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft die Verwendung von partikulären Emulgatoren in abhäsiven siloxanhaltigen Beschichtungsmassen zur Erzeugung von dauerhaft homogenen, niedrigviskosen Mischungen.

Abhäsive Beschichtungsmassen werden in größerem Umfang zur Beschichtung insbesondere von flächigen Materialien verwendet, um die Adhäsionsneigung von adhärierenden Produkten gegenüber diesen Oberflächen zu verringern.

Abhäsive Beschichtungsmassen werden beispielsweise zur Beschichtung von Papieren oder Folien verwendet, welche als Träger für selbstklebende Etiketten dienen sollen. Die mit einem Haftkleber versehenen Etiketten haften auf der beschichteten Oberfläche noch in genügendem Maße, um die Handhabung der die Klebeetiketten aufweisenden Trägerfolien zu ermöglichen. Die Haftung der Klebeetiketten auf den Trägerfolien muss so hoch sein, dass bei der maschinellen Applikation von Etiketten, zum Beispiel auf Gebinden, beim Lauf der mit den Etiketten versehenen Trägerfolien über Umlenkwalzen kein vorzeitiges Ablösen erfolgt.

Weitere Anwendungsmöglichkeiten für abhäsive Beschichtungsmassen sind Verpackungspapiere und -folien, die insbesondere zur Verpackung von klebrigen Gütern dienen. Derartige abhäsive Papiere oder Folien werden beispielsweise zum Verpacken von Lebensmitteln oder zum Verpacken technischer Produkte, wie zum Beispiel Bitumen, verwendet.

Eine weitere Anwendung von abhäsiven Beschichtungsmassen besteht in der Herstellung von Haftverschlüssen, wie zum Beispiel bei sogenannten Höschenwindeln. Ist die Abhäsivität zu hoch, d.h. der Trennwert zu niedrig, bleibt die Windel nicht zuverlässig geschlossen. Ist die Abhäsivität zu niedrig und damit der Trennwert zu hoch, lässt sich der Verschluss nicht mehr ohne Zerreißen der Windel öffnen.

In allen Anwendungen ist die gezielte Einstellung der Abhäsivität wichtig für die Funktion der abhäsiven Beschichtung. Diese Einstellung erfolgt über die Mischung zweier oder mehrerer Komponenten.

Seit den 70er Jahren sind 100%ige abhäsive Beschichtungsmassen im Markt bekannt, die ohne den Einsatz von Lösungsmitteln oder Wasser auskommen. Diese können durch thermisch induzierte Reaktionen vernetzen. Thermisch induzierte Reaktionen sind typischerweise katalysierte Anlagerungsreaktionen von Si-H-Gruppen an vinylischen oder endständigen Doppelbindungen.

Seit den 80er Jahren sind auch zwei strahlenhärtende, abhäsive Beschichtungsmassen im Markt bekannt.

Ein System, bestehend aus epoxyhaltigen Siliconen, härtet unter UV-Strahlung nach einem kationischen Härtungsmechanismus aus. Dieses System wird u.a. in US 4,421,904, US 4,547,431, US 4,952,657, US 5,217,805, US 5,279,860, US 5,340,898, US 5,360,833, US 5,650,453, US 5,866,261 und US 5,973,020 beschrieben.

Das andere System härtet nach einem freien radikalischen Polymerisationsmechanismus nach Bestrahlung mit UV- oder Elektronenstrahlen aus. Solche Systeme sind zum Beispiel in US 4,2018,08, US 4,568,566, US 4,678,846, US 5,494,979, US 5,510190, US 5,552,506, US 5,804,301, US 5,891,530 und US 5,977,282 beschrieben. Analoge Polysiloxane mit über SiOC-Gruppen gebundenen (Meth)acrylsäureestergruppen werden in der US 2005/136269 beschrieben.

In Systemen, die nach einem freien radikalischen Mechanismus aushärten, sind die polymerisierbaren Gruppen typischerweise (Meth)acrylsäureestergruppen.

Im Falle der UV-Vernetzung werden den letztgenannten Organosiliciumverbindungen Photoinitiatoren zugegeben. Geeignete Photoinitiatoren werden u.a. in "J.P. Fouassier, Polymerization photoinitiators: Exited state process and kinetic aspects, Progress in Organic Coating, 18 (1990) 229-252", in "J.P. Fouassier, Photochemical reactivity of UV radical photoinitiators of polymerisation: A general discussion, Recent Res. Devel. Photochem. & Photobiol., 4(2000):51-74", in "D. Ruhlmann et al, Relations structure-proprietes dans les photoamorceurs de polymerisation-2. Derives de Phenyl Acetophenone, Eur. Polym. J. Vol. 28, No. 3, pp. 287-292, 1992" und "K.K. Dietliker, Chemistry & Technology of UV & EB Formulation for Coatings, Inks & Paints, Volume 3, Sita Technology Ltd, UK", der US 2004/082681 und US 4,347,111 genannt.

Laut Stand der Technik werden Mischungen von mehreren (meth)acrylierten Polysiloxanen mit unterschiedlichen Kettenlängen und/oder Modifizierungsarten verwendet (US 6,548,568, US 6,268,404, US 6,548,568 der Goldschmidt GmbH), Veröffentlichung "TEGO® RC Silicones, Application Guide", Goldschmidt Produktdatenblätter zu den Produkten TEGO® RC 902, RC 726, RC 711, RC 708, RC 709, RC 715, RC 706). Ein niedrig modifiziertes, hochmolekulares Siliconacrylat ist dabei hauptsächlich für die Trenneigenschaften verantwortlich, während hochmodifizierte Siliconacrylate für eine gute Haftung zum Substrat sorgen. Darüber hinaus können zu einem oder einer Mischung von mehreren (meth)acrylierten Polysiloxanen eine oder mehrere organische (meth)acrylierte Verbindungen, zum Beispiel als Haftkomponenten oder als Reaktivverdünner, zugesetzt werden.

Die Verwendung solcher Kombinationen von (meth)acrylierten Verbindungen hat gegenüber den Einzelkomponenten beispielsweise den Vorteil einer verbesserten Haftung am Untergrund, des gezielten Einstellens der Abhäsivität oder der Verringerung oder Erhöhung der Viskosität.

Bei der Verwendung von Kombinationen von verschiedenen (meth)acrylierten Produkten nach dem Stand der Technik tritt das Problem auf, dass die verwendeten Komponenten meist nicht dauerhaft homogen mischbar sind. Die Handhabung von zwei oder mehr nicht mischbaren Komponenten und die daher kurz vor der Applikation erforderliche Herstellung einer Mischung ist für den Anwender ungünstig oder nicht gewünscht. In solchen Fällen besteht daher der Bedarf, die Entmischung der einzelnen Komponenten zu verhindern und somit eine signifikante Erleichterung bei der Applikation von abhäsiven (meth)acrylierten Polysiloxanen durch die Bereitstellung eines dauerhaft stabilen Einkomponentensystems zu ermöglichen.

Dabei ist darauf zu achten, dass die Homogenität und Stabilität der Mischungen nicht durch eine besonders hohe Viskosität erreicht wird. Die Mischungen sollten einen nur geringen Viskositätsanstieg oder aber scherverdünnende Eigenschaften aufweisen, da die gängigen Beschichtungsmaschinen mit Beschichtungsmassen stark erhöhter Viskosität nicht zufriedenstellend arbeiten können. Solche Beschichtungswerke können zum Beispiel Direkt Gravur, Indirekt Gravur, Flexodruck, Offset Gravur und Mehrwalzen-Beschichtungswerke sein.

Nach dem Stand der Technik werden abhäsiven Beschichtungsmassen spezielle feinteilige Füllstoffe zugegeben, um den damit hergestellten Trennbeschichtungen verbesserte Eigenschaften zu vermitteln. Als Füllstoffe werden Silicate, Talkum, Siliconharzpartikel, polymere Wachspartikel, PTFE-Partikel, Kreide, Titandioxid, Carbonate und ähnliches eingesetzt. Solche Füllstoffe können unterschiedliche Aufgaben erfüllen.

Sie haben zum Beispiel die Aufgabe, den Reibungskoeffizienten der damit hergestellten Trennbeschichtung zu verringern. JP 06-246880 A beschreibt ein thermisch aushärtendes Silicon, das mit kolloidalem Silika versetzt wird, um die Reibung der damit hergestellten Trennbeschichtung zu reduzieren. US 5,942,557 beschreibt die Herstellung einer Trennbeschichtung mit niedrigem Reibungskoeffizienten aus einem kationisch UV-härtenden Silicon und feinen Siliconharz-Partikeln.

Häufig werden Füllstoffe abhäsiven Beschichtungsmassen zugegeben, um der damit hergestellten Beschichtung ein raues oder mattes Aussehen zu verleihen. In US 4,417,023 werden Füllstoffe, wie Silicate, Talkum und Carbonate, in UV-härtenden, abhäsiven Beschichtungsmassen beschrieben mit dem Ziel, den Glanz einer damit hergestellten Beschichtung zu reduzieren. Da die Silicate, Talkum oder Carbonate sich in der Mischung absetzen, wird vorgeschlagen, die Mischung durch einen Stabilisator aus einem organomodifizierten Siloxan zu stabilisieren. EP 0 936 973B1 beschreibt einen mehrschichtigen Verbundkörper, bestehend aus einem flexiblen Hilfsträger, der mindestens auf einer Seite eine Trennschicht enthält, die die Ablösung einer hiermit in Kontakt befindlichen Funktionsschicht ermöglicht. Die Trennschicht ist aufgebaut aus einer kontinuierlichen Phase und einem teilchenförmigen Füllstoff, wobei die Oberfläche der Füllstoffteilchen vollständig von der kontinuierlichen Phase bedeckt ist, die kontinuierliche Phase ein vernetztes Polyorganosiloxan enthält und die Rauhigkeit der Trennschicht eine Mindestrauhigkeit aufweist. Dieses Patent zielt darauf ab, durch die Rauhigkeit der Trennschicht eine Rauhigkeit in der damit in Kontakt befindlichen Funktionsschicht zu erzeugen. Es soll damit eine mattierende Wirkung in der Funktionsschicht erreicht werden.

US 6,231,922 beschreibt die Herstellung von trägerlosen Etiketten mit einem niedrigen Glanzgrad, wobei das Etikett eine Trennbeschichtung enthält, bestehend aus einem UV-härtenden epoxyfunktionellen Siloxan, reaktiven Verdünnern und einem wachsbeschichteten Silika.

US 6,022,050 beschreibt ein kationisch UV-härtendes Silicon zur Herstellung einer Trennbeschichtung, zum Beispiel für trägerlose Etiketten, das zur Einstellung des Glanzgrades ein wachsbeschichtetes Silika enthalten kann.

US 6,004,630 beschreibt die Herstellung von trägerlosen Etiketten mit niedrigem Glanz durch die Zugabe von polymeren Wachspartikeln in UV-härtenden Siliconmassen.

WO 2002/018506 beschreibt die Verwendung von nicht-zellulosehaltigen Partikeln (z.B. Talkum, Silika, Kaolin, Titandioxid) zur Vermeidung der Nebelbildung bei der Auftragung von abhäsiven Siliconbeschichtungen.

DE 38 41 843 C1 beschreibt (meth)acrylsäureestermodifizierte Organopolysiloxane, welche aus mehreren Fraktionen äquilibrierter (meth)acrylsäureestermodifizierter Organopolysiloxane bestehen, die sich durch ihre mittlere Sianzahl im Molekülgemisch unterscheiden.

US 5,494,979 A beschreibt eine abhäsive Beschichtungszusammensetzung basierend auf einem Organopolysiloxan mit strahlungshärtenden (Meth)acrylatestergruppen, das ein Additiv enthält, welches den Grad der Abhäsivität beeinflusst, wobei das Additiv durch die Reaktion eines MQ-Harzes mit einem Polysiloxan, das (Meth)acrylatestergruppen enthält, erhalten wird.

EP 1 820 825 A1 beschreibt ein Verfahren zur Herstellung von siloxanhaltigen Trennbeschichtungen, bei dem eine siloxanhaltige Beschichtungsmasse durch Bestrahlung mit Mikrowellen ausgehärtet wird.

Der Zusatz von Festkörpern zu zwei nicht mischbaren flüssigen Phasen zur Stabilisierung von Emulsionen ist bereits seit langem bekannt (siehe sog. Pickering-Emulsionen; eine Übersicht findet sich in B.P. Binks: Particles as Surfactants - Similarities and Differences, Current Opinion in Colloid & Interface Science 7 (2002) pages 21-41). Allerdings handelt es sich hierbei um Emulsionen aus einer sehr polaren Phase (z.B. Wasser) und einer unpolaren Phase (z.B. Öl), wobei die Benetzungseigenschaften der verwendeten Festkörper gegenüber beiden flüssigen Phasen die Eigenschaften der erhaltenen festkörperstabilisierten Emulsionen bestimmen.

Überraschenderweise wurde gefunden, dass durch den Einsatz der erfindungsgemäß verwendeten partikulären Emulgatoren Beschichtungsmassen, enthaltend Kombinationen von mehreren (meth)acrylierten Polysiloxanen oder Kombinationen von einem oder mehreren (meth)acrylierten Polysiloxanen und organischen (meth)acrylierten Verbindungen, welche miteinander und unter-einander nicht kompatibel sind, dauerhaft homogenisiert werden können, und die nach Einbringung der erfindungsgemäß verwendeten Emulgatoren nur einen geringen Viskositätsanstieg erfahren bzw. scherverdünnendes Verhalten aufweisen. Die erfindungsgemäßen Beschichtungsmassen liefern nach einer Auftragung auf flächige Substrate mit Hilfe von Beschichtungs- und Aushärtungsverfahren nach dem Stand der Technik abhäsive Beschichtungen, die im Gegensatz zu der Verwendung von nicht erfindungsgemäßen Füllstoffen nicht mattiert sind.

Ein Gegenstand der Erfindung sind daher dauerhaft homogene, niedrigviskose, strahlenhärtbare Beschichtungsmassen, enthaltend

    a) x (meth)acrylierte Polysiloxane
    und gegebenenfalls
    b) y (meth)acrylierte organische Verbindungen
    und
    c) mindestens einen partikulären hydrophoben Emulgator bestehend aus hydrophob modifizierten Kieselsäuren und/oder Siliconharzpartikeln mit einer mittleren Partikelgröße von < 1000 nm in mindestens einer Dimension,

mit der Maßgabe, dass

$$x \geq 1,$$

$$y \geq 0,$$

die Summe aus x + y $\geq$ 2
und die Mischung aus den Komponenten a) und b) allein nicht dauerhaft homogen ist,
wobei dauerhaft homogen bedeutet, dass die beanspruchte Beschichtungsmasse bei Lagerung bei Zimmertemperatur mindestens 14 Tage sedimentationsstabil ist, wobei die Sedimentationsstabilität mit Hilfe einer LUMiFuge 116 der Firma L.U.M. geprüft wird, indem eine 2 ml Probe in einem Zentrifugenröhrchen mit einem Durchmesser von 1 cm 17 Stunden bei 30°C mit einer Umdrehungszahl von 2000/min zentrifugiert wird und danach die Höhe des Überstandes bestimmt wird, wobei niedrigviskos bedeutet, dass die beanspruchte Beschichtungsmasse mit Komponente c) eine maximal doppelte Ruhescherviskosität wie auch eine maximal doppelte Viskosität bei hohen Scherraten aufweist, gegenüber einer Beschichtungsmasse ohne Komponente c), wobei die Ruhescherviskosität eine Scherrate von 1 s$^{-1}$ bedeutet und hohe Scherraten bedeutet >1000/s und die Viskositäten mit Hilfe eines Rheometers Physica MCR 301 der Firma Anton Paar bestimmt wird, wobei die Messung bei 25°C mit einer Kegel-Platte-Geometrie, Durchmesser 5 cm, durchgeführt wird.

Dauerhaft homogen bedeutet im Sinne dieser Erfindung, dass die Beschichtungsmasse bei Lagerung bei Zimmertemperatur mindestens 14 Tage sedimentationsstabil ist. Zur Quantifizierung der Sedimentationsstabilität eignet sich insbesondere eine analytische Zentrifuge, welche unter der Bezeichnung Lumifuge bei der Firma LUM GmbH, Berlin, erhältlich ist. Hierbei wird die Sedimentationsgeschwindigkeit in $\mu$m/s bei bis zu 1200 g gemessen, was Rückschlüsse auf die Absetzgeschwindigkeit bei 1 g zulässt.

Niedrigviskos bedeutet im Sinne der vorliegenden Erfindung, dass die sedimentationsstabile Mischung im Vergleich zur nicht stabilen Mischung (also Mischungen ohne erfindungsgemäßen partikulären Emulgator) maximal eine Verdreifachung, bevorzugt maximal eine Verdopplung sowohl der Ruhescherviskosität (= Viskosität bei einer Scherrate von 1 s$^{-1}$) als auch der Viskosität bei hohen Scherraten (> 1000 s$^{-1}$) erfährt.

Die Sedimentationsstabilität der erfindungsgemäßen Beschichtungsmassen ist insofern überraschend, da üblicherweise festkörperhaltige Dispersionen des Standes der Technik eine recht große Tropfengröße von > 1 $\mu$m bis ca. 5 $\mu$m besitzen, was bei anwendungstechnisch sinnvollen Viskositäten von ca. 500 mPa s bis ca. 2000 mPa s zur Separation führt.

Die in der oben angeführten Literatur beschriebenen (meth-) acrylierten Polysiloxane und die jeweiligen Katalysatoren bzw. Initiatoren können auch erfindungsgemäß verwendet werden. Der Inhalt der oben angeführten Literatur und Patentliteratur zur chemischen Charakterisierung der siloxanhaltigen Beschichtungsmassen sowie der mitverwendbaren Initiatoren bzw. Katalysatoren wird hiermit als Referenz eingeführt und gilt als Teil des Offenbarungsgehaltes der vorliegenden Anmeldung.

Geeignete organische (meth)acrylierte Verbindungen sind zum Beispiel Polyether(meth)acrylate, Polyester(meth)acrylate, Polyurethan(meth)acrylate, Epoxy(meth)acrylate, multifunktionelle oder monoacrylierte, vollständig oder teilacrylierte Alkohole, wie sie beispielsweise unter den Bezeichnungen Laromer® (BASF) oder Ebecryl® (Cytec) kommerziell verfügbar sind.

Die erfindungsgemäßen partikulären Emulgatoren können entweder als Partikel vorliegen oder aber Agglomerate von Primärteilchen sein; die Teilchengröße der Partikel bzw. Agglomerate ist in mindestens einer Dimension < 1000 nm, bevorzugt < 500 nm, insbesondere bevorzugt < 200 nm. Besonders bevorzugt ist eine Teilchengröße der partikulären Emulgatoren in mindestens einer Dimension kleiner als die Beschichtungsstärke der abhäsiven Beschichtung, da sonst Änderungen im optischen Erscheinungsbild der abhäsiven Beschichtungen auftreten.

Die erfindungsgemäß verwendeten partikulären Emulgatoren werden dabei in einer Menge von 0,1 bis 10 Gew.-%, bezogen auf Gesamtformulierung, und besonders bevorzugt in einer Menge von 0,5 bis 3 Gew-%, verwendet.

Beispiele für erfindungsgemäße partikuläre Emulgatoren sind hydrophob modifizierte Kieselsäuren, Siliconharzpartikel, SchichtSilicate, Bentonite oder Metalloxide, wie zum Beispiel Aluminiumoxid, sowie deren Mischungen.

Solche erfindungsgemäß verwendbare, feinteilige Partikel können sowohl nicht-strukturmodifizierte als auch strukturmodifizierte pyrogene Kieselsäuren oder Mischungen von beiden sein, deren Silanol-Gruppen durch Oberflächenmodifizierung mit hydrophoben Beschichtungsstoffen oder Reaktanden hydrophobiert wurden. Die Hydrophobierung erfolgt bevorzugt durch die Behandlung mit Hexamethyldisilazan, Polydimethylsiloxan, Chlorsilanen, cyclischen Siloxanen, Alkylsilanen, oder (meth)acrylierten Silanen.

Des Weiteren können solche feinteiligen Partikel auch Kieselsole, wie zum Beispiel unter dem Namen Ludox® von der Firma Grace Davison, USA, erhältlich, oder Siliconharzpartikel sein, deren Oberfläche über Tenside, insbesondere kationische Tenside, und/oder reaktive Silane zumindest partiell modifiziert wurde.

Die erfindungsgemäßen feinteiligen hydrophoben Partikel zeichnen sich dadurch aus, dass sie die Viskosität der abhäsiven Beschichtungsmassen auch bei höheren Zugabemengen deutlich weniger erhöhen als nicht erfindungsgemäß verwendbare Partikel.

Nicht erfindungsgemäße Zusätze wie zum Beispiel hydrophile Kieselsäuren führen einerseits zu einer sehr starken Verdickung der (meth)acrylierten Siloxane, was eine Applikation mit herkömmlichen Beschichtungsverfahren erschwert. Weiterhin ergeben diese nicht erfindungsgemäßen Zusätze keine stabilen Einkomponentensysteme.

Die erfindungsgemäßen feinteiligen, partikulären Emulgatoren haben, im Gegensatz zu der Verwendung von nicht-erfindungsgemäßen Füllstoffen, keinen oder nur einen geringen Einfluss auf den Glanzgrad, die Rauhigkeit und den Reibungskoeffizienten der abhäsiven Beschichtung. Dieser Einfluss ist sehr gering oder nicht vorhanden bei üblichen Schichtstärken der abhäsiven Beschichtung und nimmt zu, wenn sehr geringe Schichtstärken beschichtet werden.

Die erfindungsgemäßen partikulären Emulgatoren können auch zusammen mit nicht-erfindungsgemäßen Füllstoffen eingesetzt werden. Durch die Mitverwendung der erfindungsgemäßen feinteiligen, hydrophoben Kieselsäuren wird die Stabilität der Dispersion gegenüber der ausschließlichen Verwendung der nicht-erfindungsgemäßen Füllstoffe deutlich verbessert.

Des Weiteren können diese erfindungsgemäßen dauerhaft homogenen Emulsionen/Dispersionen mit weiteren Hilfs- und Zusatzstoffen nach dem Stand der Technik gemischt werden. Hier sind insbesondere Photoinitiatoren, Haftvermittler, Härtungsbeschleuniger, Photosensibilatoren, Antioxidationsmittel, Sauerstofffänger, Farbstoffe, Pigmente oder organische (meth)acrylgruppenhaltige oder vinylethergruppenhaltige Verbindungen zu nennen.

Beispiele:

Beispiel 1:

70 g Tego® RC 902 wurden mit 30 g RC 711 und 3 g Aerosil R 202 (Degussa/Deutschland) sowie 2 g Tego® Photoinitiator A 17 gemischt und in einem Dispermaten mit 1000 U/min für 10 min bei 30 °C dispergiert. Man erhielt eine homogene sedimentationsstabile Emulsion.

Beispiel 2:

a) Modifizierung von LUDOX® SM-AS mit VARIQUAT® K-300

In 200 ml Toluol wurden 9,6 g VARIQUAT® K-300 (75 Gew.-% in IPA) bei 60 °C gelöst. In diese Lösung wurden 100 ml LUDOX® SM-AS (wässrige Dispersion, entsprechend 29 g SiO2) unter Rühren eingetropft. Danach wurde für weitere 15 min bei dieser Temperatur gerührt. Die Toluolphase wurde in einem Scheidetrichter abgetrennt und mit Natriumsulfat getrocknet. Die getrocknete toluolische Dispersion enthielt 19,1 Gew.-% modifizierte Partikel.

b) Herstellung der RC-Emulsion

In einem 250 ml-Dreihalskolben wurden 70 g Tego RC 902 vorgelegt und mit 20 g der auf mit trockenem Toluol auf 5 Gew.-% verdünnten, toluolischen Partikeldispersion und 1,4 g Tego Photoinitiator A17 versetzt. Das Toluol wurde unter Rühren mit einem KPG-Rührer im Vakuum bei 30 °C abdestilliert. Danach wurden 30 g Tego® RC 711 mit 0,6 g Tego® Photoinitiator gemischt und dem Ansatz zugegeben. Anschließend wurde eine Stunde bei 30 °C unter Vakuum mit dem KPG-Rührer bei 600 U/min gerührt. Man erhielt eine homogene sedimentationsstabile Emulsion.

Beispiel 3:

In einem 250 ml-Dreihalskolben wurden 70 g Tego® RC 902 vorgelegt und mit 20 g der auf mit trockenem Toluol auf 5 Gew.-% verdünnten, toluolischen Partikeldispersion (s. Beispiel 2) und 1,4 g Tego® Photoinitiator A17 versetzt. Das Toluol wurde unter Rühren mit einem KPG-Rührer im Vakuum bei 30 °C abdestilliert. Danach wurden 27 g Tego RC 711 mit 0,6 g Tego® Photoinitiator und 3 g Ebecryl® OTA 480 (Cytec) gemischt und dem Ansatz zugegeben. Anschließend wurde eine Stunde bei 30 °C unter Vakuum mit dem KPG-Rührer bei 600 U/min gerührt. Man erhielt eine homogene sedimentationsstabile Emulsion.

Beispiel 4:

a) Modifizierung von LUDOX® SM-AS mit ADOGEN 442-100P

In 200 ml Toluol wurden 8,7 g ADOGEN® 442-100P bei 60 °C gelöst. In diese Lösung wurden 100 ml LUDOX® SM-AS (wässrige Dispersion, entsprechend 29 g SiO2) unter Rühren eingetropft. Danach wurde für weitere 15 min bei dieser Temperatur gerührt. Die Toluolphase wurde in einem Scheidetrichter abgetrennt und mit Natriumsulfat getrocknet. Die getrocknete toluolische Dispersion enthielt 16,8 Gew.-% modifizierte Partikel.

b) Herstellung der RC-Emulsion

50 g Tego® RC 902 wurden in einem Kolben vorgelegt und mit 29,2 g der auf mit trockenem Toluol auf 5 Gew.-% verdünnten toluolischen Partikeldispersion und 1,0 g Tego® Photoinitiator A17 versetzt. Das Toluol wurde am Rotationsverdampfer bei 35 °C abgezogen. Zu 36 g dieser Mischung wurden in einem 50 ml-Becherglas 15 g einer Lösung aus 0,3 g Tego Photoinitiator A17 in 14,7 g Tego® RC 711 gegeben. Anschließend wurde die Mischung für 10 min an einem Dissolver bei 1000 U/min homogenisiert. Man erhielt eine homogene sedimentationsstabile Emulsion.

Beispiel 5:

In einem 250 mL Dreihalskolben wurden 70 g Tego® RC 902 mit 10 g Toluol und 4 g einer 50 %igen xylolischen Lösung eines aminofunktionellen MQ-Harzes <$M_n$ = ca. 4000 g/mol, w (N) = 0,7 %) versetzt und bei 50 °C 30 min lang gerührt. Anschließend wurden 30 g Tego® RC 711 und 2 g Tego® Photoinitiator A 17 zugesetzt und bei 50 °C das Lösemittel im Vakuum entfernt. Man erhielt eine homogene sedimentationsstabile Emulsion.

Beispiel 6:

In einem 250 mL Dreihalskolben wurden 70 g Tego® RC 902 mit 10 g Toluol und 6 g einer 50 %igen xylolischen Lösung eines aminofunktionellen MQ-Harzes ($M_n$ = ca. 4000 g/mol, w (N) = 0,7 %) versetzt und bei 50 °C 30 min lang gerührt. Anschließend wurden 30 g Tego® RC 711 und 2 g Tego Photoinitiator A 17 zugesetzt und bei 50 °C das Lösemittel im Vakuum entfernt. Man erhielt eine homogene sedimentationsstabile Emulsion.

Beispiel 7:

In einem 250 mL Dreihalskolben wurden 70 g Tego® RC 902 mit 10 g Toluol und 6 g einer 50 %igen xylolischen Lösung eines aminofunktionellen MQ-Harzes ($M_n$ = ca. 4500 g/mol, w (N) = 1,0 %) versetzt und bei 50 °C 30 min lang gerührt. Anschließend wurden 20 g Tego RC 711, 10 g Ebecryl OTA 480 und 2 g Tego Photoinitiator A 17 zugesetzt und bei 50 °C das Lösemittel im Vakuum entfernt. Man erhielt eine homogene sedimentationsstabile Emulsion.

Vergleichsbeispiel 1:

70 g Tego® RC 902 wurden mit 30 g RC 711 und 3 g Aerosil A 200 sowie 2 g Tego® Photoinitiator A 17 gemischt und in einem Dispermaten mit 1000 U/min für 10 min bei 30 °C dispergiert. Man erhielt eine pastöse Mischung.

Vergleichsbeispiel 2:

70 g Tego® RC 902 wurden mit 30 g RC 711 und 3 g Sipernat 160 sowie 2 g Tego® Photoinitiator A 17 gemischt und in einem Dispermaten mit 1000 U/min für 10 min bei 30 °C dispergiert. Man erhielt eine pastöse Mischung.

Vergleichsbeispiel 3:

70 g Tego® RC 902 wurden mit 30 g RC 711 sowie 2 g Tego® Photoinitiator A 17 gemischt und in einem Dispermaten mit 1000 U/min für 10 min bei 30 °C dispergiert. Man erhielt eine homogene Emulsion, welche nach 24 Stunden vollständig in zwei Phasen aufgetrennt ist.

Anwendungstechnische Austestung:

Zur Überprüfung der Sedimentationsstabilität der Mischungen, die die erfindungsgemäßen Festkörperemulgatoren enthalten, wird eine analytische Zentrifuge verwendet, die unter der Bezeichnung LUMiFuge 116 von der Firma L.U.M. GmbH, Berlin, erhältlich ist. Dazu wurden die Zentrifugenröhrchen (d = 1 cm) mit 2 mL der entsprechenden Emulsion befüllt und 17 Stunden lang bei 30 °C mit einer Umdrehungszahl von 2000/min zentrifugiert. Anschließend würde die Höhe des klaren Überstandes bestimmt.
Bei den erfindungsgemäßen Beispielen 1 bis 7 betrug dieser < 3 mm; bei den Vergleichsbeispielen 1 und 2 betrug dieser > 3 mm.
Dies zeigt, dass die erfindungsgemäß verwendeten Emulgatoren in der Lage sind, die ansonsten nicht kompatiblen, acrylierten Verbindungen in eine stabile Emulsion zu überführen.
Zur Messung der Ruhescherviskosität, die hier als Viskosität bei einer Scherrate von 1 s$^{-1}$ definiert wird, und der Viskosität bei hohen Scherraten wurde ein Rheometer Physica MCR 301 von Anton Paar verwendet. Die Messungen wurden bei 25 °C und einer Kegel-Platte-Geometrie durchgeführt (5 cm Durchmesser). Die Messergebnisse sind in der folgenden Tabelle aufgeführt.

|  | Viskosität bei hoher Scherrate (1000 s$^{-1}$)/mPa s | Ruhescherviskosität /mPa s |
|---|---|---|
| Beispiel 1 | 950 | 1310 |
| Beispiel 2 | 800 | 1100 |
| Beispiel 3 | 820 | 1160 |
| Beispiel 4 | 820 | 1210 |
| Beispiel 5 | 890 | 1300 |
| Beispiel 6 | 910 | 1250 |
| Beispiel 7 | 910 | 1240 |
| Vergleichsbeispiel 1 | 1650 | 5600 |
| Vergleichsbeispiel 2 | 2100 | 4200 |
| Vergleichsbeispiel 3 | 750 | 950 |

Die Ergebnisse zeigen, dass die erfindungsgemäß verwendeten Emulgatoren in der Lage sind, die ansonsten nicht kompatiblen, acrylierten Verbindungen zu emulgieren, ohne dass eine übermäßige Viskosität aufgebaut wird.
Zur Überprüfung der anwendungstechnischen Eigenschaften der ausgehärteten Mischungen werden die erfindungsgemäßen Mischungen sowie die Vergleichsbeispiele nach Zugabe des jeweiligen Photoinitiators auf flächige Träger (orientierte Polypropylenfolie) aufgetragen und durch Einwirkung von UV-Licht einer dem Stand der Technik entsprechenden Mitteldruckquecksilberdampflampe mit einer UV-Leistung von 50 W/cm unter Stickstoffinertisierung mit kontrolliertem Restsauerstoffgehalt von < 50 ppm bei der Bahngeschwindigkeit vom 200 m/min gehärtet. Die Auftragsmenge beträgt in jedem Fall ca. 1 g/m$^2$.

Trennwert:

Für die Ermittlung der Trennwerte wird ein 25 mm breites Klebeband, das mit einem Kautschuk-Kleber beschichtet ist und als TESA® 7476 im Handel von der Firma Beiersdorf erhältlich ist, verwendet.
Zur Messung der Abhäsivität werden diese Klebebänder auf den Untergrund aufgewalzt und anschließend bei 40 °C unter einem Gewicht von 70 g/cm$^2$ gelagert. Nach 24 Stunden wird die Kraft gemessen, die benötigt wird, um das jeweilige Klebeband mit einer Geschwindigkeit von 30 cm/min unter einem Schälwinkel von 180° vom Untergrund abzuziehen. Diese Kraft wird als Trennkraft oder Trennwert bezeichnet. Die allgemeine Testprozedur entspricht im Wesentlichen der Testmethode Nr. 10 der "Fédération Internationale des Fabricants et Transformateurs D'Adhésifs et Thermocollants sur Papier et autres Supports" (FINAT) .

Restklebkraft:

Die Bestimmung der Restklebkraft erfolgt weitestgehend gemäß der FINAT Testvorschrift Nr. 11. Hierzu wird das Klebeband TESA® 7475 der Firma Beiersdorf auf den Untergrund gewalzt und anschließend bei 40 °C unter einem Gewicht von 70 g/cm$^2$ gelagert. Nach 24 Stunden wird das Klebeband vom Trennsubstrat getrennt und auf einen definierten Untergrund (Stahlplatte, Glasplatte, Folie) aufgewalzt. Nach einer Minute wird die Kraft gemessen, die benötigt wird, um das Klebeband mit einer Geschwindigkeit von 30 cm/min unter einem Schälwinkel von 180° vom Untergrund abzuziehen. Der so gemessene Wert wird durch den Wert geteilt, den ein unbehandeltes Klebeband unter ansonsten gleichen Testbedingungen ergibt. Das Ergebnis wird als Restklebkraft bezeichnet und in der Regel in Prozent angegeben. Werte über 80 % gelten dem Fachmann als ausreichend und sprechen für eine gute Aushärtung.

Glanz:

Der Glanzgrad der beschichteten Folien und damit die mattierende Wirkung der partikulären Emulgatoren kann subjektiv beurteilt und gegen das Vergleichsbeispiel 3 verglichen werden.

| | Trennwert TESA® 7476/ cN/in | Restklebkraft/ % | Glanz im Vergleich zu Vergleichsbeispiel 3 |
|---|---|---|---|
| Beispiel 1 | 43 | 92 | gleich |
| Beispiel 2 | 48 | 93 | gleich |
| Beispiel 3 | 45 | 95 | gleich |
| Beispiel 4 | 43 | 92 | gleich |
| Beispiel 5 | 42 | 94 | gleich |
| Beispiel 6 | 50 | 90 | gleich |
| Beispiel 7 | 49 | 90 | gleich |
| Vergl.Beispiel 1 | 60 | 90 | matt |
| Vergl.Beispiel 2 | 59 | 94 | matt |
| Vergl.Beispiel 3 | 45 | 92 | - |

Die Ergebnisse zeigen, dass die erfindungsgemäß verwendeten Emulgatoren in der Lage sind, Beschichtungen mit gleich hohem Glanzgrad, wie das beim Vergleichsbeispiel (Vergl.Beispiel) 3 der Fall ist, zu erzeugen. Die Aushärtung und die Trennwerte der Silicone werden nicht beeinflusst.

**Patentansprüche**

1. Dauerhaft homogene, niedrigviskose, strahlenhärtbare Beschichtungsmasse, enthaltend

a) x (meth)acrylierte Polysiloxane
und gegebenenfalls
b) y (meth)acrylierte organische Verbindungen
und
c) mindestens einen partikulären hydrophoben Emulgator bestehend aus hydrophob modifizierten Kieselsäuren und/oder Siliconharzpartikeln mit einer mittleren Partikelgröße von < 1000 nm in mindestens einer Dimension,

mit der Maßgabe, dass

$$x \geq 1,$$

$$y \geq 0,$$

die Summe aus x + y $\geq$ 2
und die Mischung aus den Komponenten a) und b) allein nicht dauerhaft homogen ist,
wobei dauerhaft homogen bedeutet, dass die beanspruchte Beschichtungsmasse bei Lagerung bei Zimmertemperatur mindestens 14 Tage sedimentationsstabil ist, wobei die Sedimentationsstabilität mit Hilfe einer LUMiFuge 116 der Firma L.U.M. geprüft wird, indem eine 2 ml Probe in einem Zentrifugenröhrchen mit einem Durchmesser von 1 cm 17 Stunden bei 30°C mit einer Umdrehungszahl von 2000/min zentrifugiert wird und danach die Höhe des Überstandes bestimmt wird,
wobei niedrigviskos bedeutet, dass die beanspruchte Beschichtungsmasse mit Komponente c) eine maximal doppelte Ruhescherviskosität wie auch eine maximal doppelte Viskosität bei hohen Scherraten aufweist, gegenüber einer Beschichtungsmasse ohne Komponente c), wobei die Ruhescherviskosität eine Scherrate von 1 s$^{-1}$ bedeutet und hohe Scherraten bedeutet >1000/s und die Viskositäten mit Hilfe eines Rheometers Physica MCR 301 der Firma Anton Paar bestimmt wird, wobei die Messung bei 25°C mit einer Kegel-Platte-Geometrie, Durchmesser 5 cm, durchgeführt wird.

2. Beschichtungsmasse gemäß Anspruch 1, **dadurch gekennzeichnet, dass** die Kieselsäuren hydrophobiert sind mit mindestens einer Verbindung, ausgesucht aus der Gruppe der Silane, Siloxane und quatären Ammoniumverbindungen.

3. Beschichtungsmasse gemäß mindestens einem der Ansprüche 1 oder 2, **dadurch gekennzeichnet, dass** als Komponente c) strukturmodifizierte Kieselsäuren verwendet werden.

4. Verwendung der Beschichtungsmasse gemäß mindestens einem der Ansprüche 1 bis 3 zur Herstellung von abhäsiven Beschichtungen.

5. Verwendung der Beschichtungsmasse gemäß mindestens einem der Ansprüche 1 bis 3 zur Herstellung von nichtmattierten abhäsiven Beschichtungen.

6. Verwendung der Beschichtungsmasse gemäß mindestens einem der Ansprüche 1 bis 3 zur Beschichtung von Kunststofffolien.

7. Verwendung der Beschichtungsmasse gemäß mindestens einem der Ansprüche 1 bis 3 zur Beschichtung von porösen oder saugenden Untergründen.

8. Verwendung der Beschichtungsmasse gemäß mindestens einem der Ansprüche 1 bis 3 zur Beschichtung von Papier.

9. Strahlenhärtbare Beschichtungsmasse gemäß den Ansprüchen 1 bis 3, **dadurch gekennzeichnet, dass** mindestens ein Photoinitiator und/oder mindestens ein Photosensibilisator in Mengen von 0,1 bis 5 Gew.-%, bezogen auf das Gewicht der acrylatfunktionellen Siliconmassen, enthalten ist.

10. Strahlenhärtbare Beschichtungsmasse gemäß den Ansprüchen 1 bis 3 und 9, **dadurch gekennzeichnet, dass** Photoinitiatoren, Haftvermittler, Härtungsbeschleuniger, Photosensibilisatoren, Antioxidationsmitterl, Sauerstofffänger, Farbstoffe, Pigmente oder organische (merh)acrylgruppenhaltige oder vinylethergruppenhaltige Verbindungen enthalten sind.

**Claims**

1. Durably homogeneous, low-viscosity, radiation-curable coating material comprising

   a) x (meth)acrylated polysiloxanes
   and if desired
   b) y (meth)acrylated organic compounds
   and
   c) at least one particulate hydrophobic emulsifier consisting of hydrophobically modified silicas and/or silicone resin particles having an average particle size of < 1000 nm in at least one dimension,

with the proviso that

$$x \geq 1,$$

$$y \geq 0,$$

the sum of x + y ≥ 2
and the mixture of components a) and b) alone is not durably homogeneous,
where "durably homogeneous" means that the claimed coating material is stable to sedimentation for at least 14 days when stored at room temperature, the sedimentation stability being tested using a LUMiFuge 116 from L.U.M., by centrifuging a 2 ml sample in a centrifuge tube having a diameter of 1 cm at a rotational speed of 2000/min at 30°C for 17 hours and thereafter determining the height of the supernatant,
and "low-viscosity" means that the claimed coating material with component c) has not more than double the shear viscosity at rest and also not more than double the viscosity at high shear rates, relative to a coating material without component c), where the shear viscosity at rest denotes a shear rate of 1 s$^{-1}$ and high shear rates denote > 1000/s and the viscosities are determined using a Physica MCR 301 rheometer from Anton Paar, the measurement being made at 25°C using a cone/plate geometry, diameter 5 cm.

2. Coating material according to Claim 1, **characterized in that** the silicas have been hydrophobicized with at least one compound selected from the group consisting of silanes, siloxanes, and quaternary ammonium compounds.

3. Coating material according to at least one of Claims 1 and 2, **characterized in that** use is made as component c) of structurally modified silicas.

4. Use of the coating material according to at least one of Claims 1 to 3 to produce abhesive coatings.

5. Use of the coating material according to at least one of Claims 1 to 3 to produce non-matted abhesive coatings.

6. Use of the coating material according to at least one of Claims 1 to 3 to coat polymeric films.

7. Use of the coating material according to at least one of Claims 1 to 3 to coat porous or absorbent substrates.

8. Use of the coating material according to at least one of Claims 1 to 3 to coat paper.

9. Radiation-curable coating material according to any of Claims 1 to 3, **characterized in that** at least one photoinitiator and/or at least one photosensitizer is included in amounts of 0.1% to 5% by weight, based on the weight of the acrylate-functional silicone materials.

10. Radiation-curable coating material according to any of Claims 1 to 3 and 9, **characterized in that** photoinitiators, adhesion promoters, curing accelerants, photosensitizers, antioxidants, oxygen scavengers, dyes, pigments or organic compounds containing (meth)acrylic groups or vinyl ether groups are included.


**Revendications**

1. Matériau de revêtement durablement homogène, de faible viscosité, durcissable par rayonnement, contenant :

a) x polysiloxanes (méth)acrylés
et éventuellement
b) y composés organiques (méth)acrylés,
et
c) au moins un émulsifiant hydrophobe particulaire constitué par des silices modifiées hydrophobiquement et/ou des particules de résine de silicone ayant une taille de particule moyenne < 1 000 nm dans au moins une dimension,

à condition que

$$x \geq 1,$$

$$y \geq 0,$$

la somme de x + y ≥ 2,
et le mélange des composants a) et b) seuls ne soit pas durablement homogène,
« durablement homogène » signifiant que ledit matériau de revêtement est stable à la sédimentation lors d'un stockage à température ambiante pendant au moins 14 jours, la stabilité à la sédimentation étant évaluée à l'aide d'un LUMiFuge 116 de la société L.U.M par centrifugation d'un échantillon de 2 ml dans un tube de centrifugation d'un diamètre de 1 cm pendant 17 heures à 30 °C avec une vitesse de rotation de 2 000/minute, puis détermination de la hauteur du surnageant,
« de faible viscosité » signifiant que ledit matériau de revêtement contenant le composant c) présente une viscosité sous cisaillement au repos au plus doublée, ainsi qu'une viscosité à des taux de cisaillement élevés au plus doublée, en comparaison d'un matériau de revêtement sans le composant c), la viscosité sous cisaillement au repos signifiant un taux de cisaillement de 1 s$^{-1}$, et des taux de cisaillement élevés signifiant > 1 000/s, et les viscosités étant déterminées à l'aide d'un rhéomètre Physica MCR 301 de la société Anto Paar, la mesure étant réalisée à 25 °C avec une géométrie cône et plaque, diamètre 5 cm.

2. Matériau de revêtement selon la revendication 1, **caractérisé en ce que** les silices sont hydrophobées avec au moins un composé choisi dans le groupe constitué par les silanes, les siloxanes et les composés d'ammonium quaternaires.

3. Matériau de revêtement selon au moins l'une quelconque des revendications 1 ou 2, **caractérisé en ce que** des silices à structure modifiée sont utilisées en tant que composant c).

4. Utilisation du matériau de revêtement selon au moins l'une quelconque des revendications 1 à 3 pour la fabrication de revêtements abhésifs.

5. Utilisation du matériau de revêtement selon au moins l'une quelconque des revendications 1 à 3 pour la fabrication de revêtements abhésifs non mats.

6. Utilisation du matériau de revêtement selon au moins l'une quelconque des revendications 1 à 3 pour le revêtement de feuilles en plastique.

7. Utilisation du matériau de revêtement selon au moins l'une quelconque des revendications 1 à 3 pour le revêtement de substrats poreux ou aspirants.

8. Utilisation du matériau de revêtement selon au moins l'une quelconque des revendications 1 à 3 pour le revêtement de papier.

9. Matériau de revêtement durcissable par rayonnement selon les revendications 1 à 3, **caractérisé en ce qu'**au moins un photoinitiateur et/ou au moins un photosensibilisateur sont contenus en quantités de 0,1 à 5 % en poids, par rapport au poids des matériaux de silicone à fonction acrylate.

10. Matériau de revêtement durcissable par rayonnement selon les revendications 1 à 3 et 9, **caractérisé en ce que** des photoinitiateurs, des promoteurs d'adhésion, des accélérateurs de durcissement, des photosensibilisateurs, des antioxydants, des capteurs d'oxygène, des colorants, des pigments ou des composés organiques contenant des groupes (méth)acryliques ou contenant des groupes éther de vinyle sont contenus.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4421904 A
- US 4547431 A
- US 4952657 A
- US 5217805 A
- US 5279860 A
- US 5340898 A
- US 5360833 A
- US 5650453 A
- US 5866261 A
- US 5973020 A
- US 4201808 A
- US 4568566 A
- US 4678846 A
- US 5494979 A
- US 5510190 A
- US 5552506 A
- US 5804301 A

- US 5891530 A
- US 5977282 A
- US 2005136269 A
- US 2004082681 A
- US 4347111 A
- US 6548568 B
- US 6268404 B
- JP 6246880 A
- US 5942557 A
- US 4417023 A
- EP 0936973 B1
- US 6231922 B
- US 6022050 A
- US 6004630 A
- WO 2002018506 A
- DE 3841843 C1
- EP 1820825 A1

**In der Beschreibung aufgeführte Nicht-Patentliteratur**

- **J.P. FOUASSIER.** Polymerization photoinitiators: Exited state process and kinetic aspects. *Progress in Organic Coating,* 1990, vol. 18, 229-252
- **J.P. FOUASSIER.** Photochemical reactivity of UV radical photoinitiators of polymerisation: A general discussion. *Recent Res. Devel. Photochem. & Photobiol.,* 2000, vol. 4, 51-74

- **D. RUHLMANN et al.** Relations structure-proprietes dans les photoamorceurs de polymerisation-2. Derives de Phenyl Acetophenone. *Eur. Polym. J.,* 1992, vol. 28 (3), 287-292
- Chemistry & Technology of UV & EB Formulation for Coatings. **K.K. DIETLIKER.** Inks & Paints. Sita Technology Ltd, vol. 3
- **B.P. BINKS.** Particles as Surfactants - Similarities and Differences. *Current Opinion in Colloid & Interface Science,* 2002, vol. 7, 21-41